# EUROPEAN PATENT APPLICATION

(11) **EP 4 067 286 A1**
(43) Date of publication of application: **05.10.2022**
(21) Application number: 22165753.9
(22) Date of filing: 31.03.2022
(51) Int. Cl.: B66D 1/54, B66D 1/58, B66D 1/48, B66D 1/14

(54) **HOIST SYSTEM AND PROCESS IMPLEMENTING SLIP DETECTION**

(30) Priority: 01.04.2021 US 202163169432 P
(71) Applicant: Breeze-Eastern LLC, Whippany, NJ 07981 (US)
(72) Inventor: AZEREDO, Ian, Whippany, 07981 (US); KAMINSKI, Brianna, Whippany, 07981 (US)
(74) Representative: Atout PI Laplace

(57) **Abstract**

A hoist system (101) that includes a hook (102); a cable (104) connected to the hook; a motor configured to move the hook and the cable; and an overload protection device (OLPD) configured to limit loads imparted on one or more of the hook, the cable, and the motor. The hoist system further includes an overload protection device (OLPD) slip detection system (200) configured to detect activation of the overload protection device (OLPD).

## Description

### FIELD OF THE DISCLOSURE

The disclosure relates to a hoist system implementing slip detection. The disclosure further relates to a hoist process implementing slip detection.

### BACKGROUND

Helicopter hoist equipment typically includes a lifting device such as a hoist, which is attached to the helicopter, a hoist cable, and a hook located at a distal end of the hoist cable for direct or indirect attachment to a person, animal, and/or one or more objects (load) for rescue, transport, lift, and/or the like. The helicopter hoist equipment usually has a rotary drum for winding in and out the hoist cable that serves to lift or transport the load. A crew member in the helicopter typically controls the helicopter hoist equipment including raising and lowering of the hook.

The environment in which the helicopter or other aircraft operates as well as the lifting device and the load that is being lifted is highly dynamic and includes or is subjected to various forces, accelerations, movements, and/or the like. A common issue with this environment is that portions of the lifting device may slip responsive to mechanical systems attempting to address various load forces. However, a pilot, crew, and/or maintainer may not be aware of the slip, which presents a risk to safe operation of the helicopter as well as presenting a safety issue for the load.

Accordingly, a system and process to detect slip is needed to ensure safe operation of the aircraft and a safety of the load.

### SUMMARY OF THE DISCLOSURE

The foregoing needs are met, to a great extent, by the disclosure, wherein in one aspect a hoist system and hoist process for slip detection are provided.

One general aspect includes a hoist system that includes a hook; a cable connected to the hook; a motor configured to move the hook and the cable; an overload protection device (OLPD) configured to limit loads imparted on one or more of the hook, the cable, and the motor; and an overload protection device (OLPD) slip detection system configured to detect activation of the overload protection device (OLPD). Other embodiments of this aspect include corresponding computer systems, apparatus, and computer programs recorded on one or more computer storage devices, each configured to perform the actions of the methods.

One general aspect includes a hoist system that includes a hook; a cable connected to the hook; a motor configured to move the hook and the cable; an overload protection device (OLPD) configured to limit loads imparted on one or more of the hook, the cable, and the motor; and an overload protection device (OLPD) slip detection system configured to detect activation of the overload protection device (OLPD), where when the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), a processor, and/or the like. Other embodiments of this aspect include corresponding computer systems, apparatus, and computer programs recorded on one or more computer storage devices, each configured to perform the actions of the methods.

One general aspect includes a hoist system process includes providing a hook; providing a cable connected to the hook; providing a motor configured to move the hook and the cable; limiting loads imparted on one or more of the hook, the cable, and the motor with an overload protection device (OLPD); and detecting activation of the overload protection device (OLPD) with an overload protection device (OLPD) slip detection system. Other embodiments of this aspect include corresponding computer systems, apparatus, and computer programs recorded on one or more computer storage devices, each configured to perform the actions of the methods.

One general aspect includes a hoist system process includes providing a hook; providing a cable connected to the hook; providing a motor configured to move the hook and the cable; limiting loads imparted on one or more of the hook, the cable, and the motor with an overload protection device (OLPD); detecting activation of the overload protection device (OLPD) with an overload protection device (OLPD) slip detection system; and determining with the overload protection device (OLPD) slip detection system that the overload protection device (OLPD) has been activated. Other embodiments of this aspect include corresponding computer systems, apparatus, and computer programs recorded on one or more computer storage devices, each configured to perform the actions of the methods.

There has thus been outlined, rather broadly, certain aspects of the disclosure in order that the detailed description thereof herein may be better understood, and in order that the present contribution to the art may be better appreciated. There are, of course, additional aspects of the disclosure that will be described below and which will form the subject matter of the claims appended hereto.

In this respect, before explaining at least one aspect of the disclosure in detail, it is to be understood that the disclosure is not limited in its application to the details of construction and to the arrangements of the components set forth in the following description or illustrated in the drawings. The disclosure is capable of aspects in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the disclosure. It is important, therefore, that the claims be regarded as including such equivalent constructions insofar as they do not depart from the spirit and scope of the disclosure.

Reference herein to an "aspect," "example," or similar formulations means that a particular feature, structure, operation or characteristic described in connection with the "aspect" or "example," is included in at least one implementation in this description. Thus, the appearance of such phrases or formulations is this application may not necessarily all refer to the same example. Further, various particular features, structures, operations, or characteristics may be combined in any suitable manner in or more examples.

### BRIEF DESCRIPTION OF THE DRAWINGS

Figure 1 illustrates a helicopter with an exemplary helicopter hoist system in accordance with aspects of the disclosure.
Figure 2 illustrates an enlarged view of components of the helicopter hoist system shown in Figure 1.
Figure 3 illustrates a schematic of components of the helicopter hoist system shown in Figure 1.
Figure 4 illustrates another schematic of components of the helicopter hoist system shown in Figure 1.
Figure 5 illustrates an exemplary process flow of the helicopter hoist system implementing the aspects of Figure 4.
Figure 6 illustrates an exemplary slip detection process in accordance with aspects of the disclosure.
Figure 7 illustrates an exemplary slip detection process in accordance with aspects of the disclosure.
Figure 8 illustrates a block diagram illustrating select components of an example helicopter hoist system in accordance with aspects of the disclosure.
Figure 9 illustrates a block diagram illustrating select components of an example helicopter hoist system in accordance with aspects of the disclosure.

### DETAILED DESCRIPTION

The disclosure will now be described with reference to the drawing Figures, in which like reference numerals refer to like parts throughout. Aspects of the disclosure advantageously provide a hoist system and hoist process for slip detection.

A helicopter hoist system may include an "overload protection device," sometimes referred to as an OLPD. One purpose of the OLPD is to limit the loads that can be imparted on a hoist and its cable, therefore protecting the hoist, cable, the underslung load, and/or the like.

The helicopter hoist system may typically include a storage drum coupled mechanically to reduction gearing and powered by a motor assembly (electrical or hydraulic) as well as a number or rotating components internally. In particular, the helicopter hoist system may implement the OLPD with one or more mechanical clutches, designed to slip at a certain torsional range and allow the cable to reel out during overload events. Moreover, the helicopter hoist system may implement reengagement after OLPD activation. In various aspects, the one or more mechanical clutches may be coupled to internal rotating components, and may be placed either adjacent to the cable storage device, within the reduction gear train, an equivalent assembly, and/or the like.

In various aspects, the helicopter hoist system may implement the OLPD utilizing electrically activated clutches, using load detection devices or means, connected with electronics or processors, and/or the like such that the gear train becomes temporarily decoupled from the cable storage device during an overload event.

The helicopter hoist system of the disclosure may further include devices or means of detecting clutch activation regardless of means or components of the helicopter hoist system. The disclosed devices may be defined as an OLPD activation sensor.

The helicopter hoist system may implement the OLPD and the OLPD activation sensor such that the sensor detects slip action of the OLPD itself, via mechanically linked components, such as the cable storage device or other components within the gear train, and/or the like.

The helicopter hoist system may implement the OLPD and the OLPD activation sensor with a configuration that compares actual detected speeds of the hoist cable, actual detected accelerations of the hoist cable, and/or the like to actual detected speeds downstream of the OLPD, actual detected acceleration downstream of the OLPD, and/or the like. The helicopter hoist system may implement the OLPD and the OLPD activation sensor may implement speed sensors such as hall effect sensors, resolvers, similar technology coupled to mechanical components, and/or the like. The helicopter hoist system may implement the OLPD and the OLPD activation sensor may implement an electronic comparison with noise screening or filtering of accelerations and speeds before and after the OLPD in order to generate a signal indicating OLPD activation.

In another configuration, the helicopter hoist system may implement the OLPD and the OLPD activation sensor to measure the actual speed and/or acceleration using sensors such as a hall effect sensor, resolvers, or other similar sensors downstream of the OLPD in order to measure actual hoist cable speed, direction of movement, and/or the like. These signals of actual speeds, directions, and/or the like may be compared to actual commanded directions (up, neutral (no command), down, variable speeds in between, and/or the like). Hoist speed may be integrated electronically to obtain measures of accelerations such as downward acceleration. Comparing downward accelerations of cable versus up or neutral (no command) input commands may result in analogous detection of OLPD activation. Downward speed exceedances versus downward input commands may also result in analogous detection of OLPD activation.

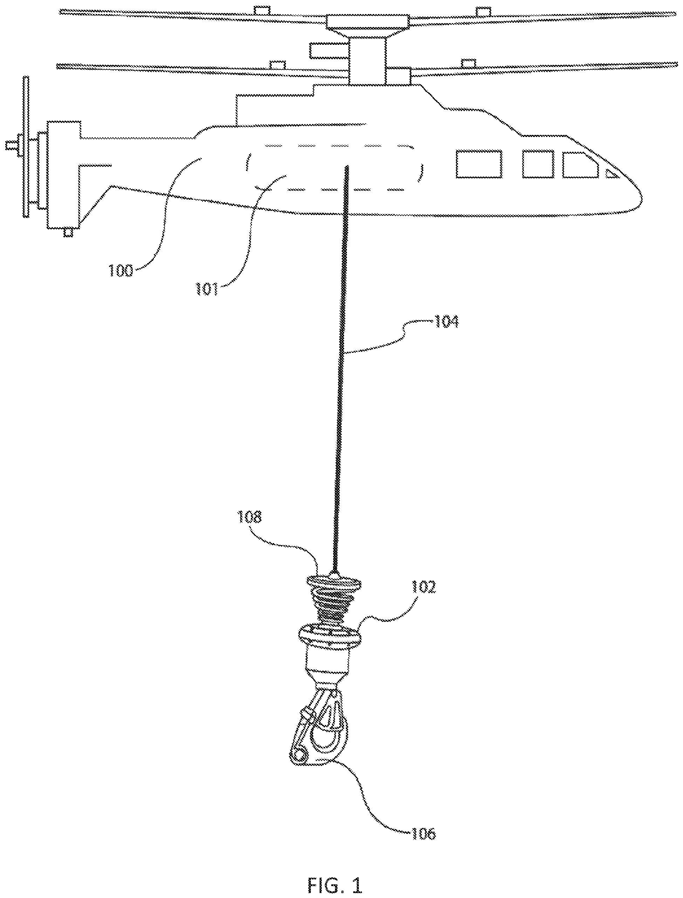

Figure 1 illustrates a helicopter with an exemplary helicopter hoist system in accordance with aspects of the disclosure.

In particular, Figure 1 shows a helicopter 100 with a hoist system 101, which may be used for search and rescue missions, transport missions, combat insertion missions, combat extraction missions, and/or the like. In certain aspects, the hoist system 101 may be implemented as a Helicopter Flight Rescue System (HFRS), a Helicopter External Transport System (HETS), and/or the like. As shown in Figure 1, the hoist system 101 may be positioned on an upper side of the aircraft and may be attached directly or indirectly to the helicopter 100. In other aspects, the hoist system 101 may be mounted to a bottom of the helicopter 100, may be mounted to a side of the helicopter 100, may be mounted internally to the helicopter 100, and/or the like.

Although Figure 1 depicts a helicopter as the exemplary airborne platform, the hoist system 101 and its associated principles and/or methodologies described herein, are not limited to helicopters, and may be applied to any airborne platform. For example, the hoist system 101 may be attached directly or indirectly to a cargo helicopter (not shown), such as mounted underneath an aircraft fuselage, mounted to a tilt rotor aircraft, an aerial crane, a flying crane, and/or the like. The hoist system 101 may also be coupled to an autonomous or remote-controlled aircraft, such as an unmanned aerial vehicle (UAV), unmanned aircraft system (UAS), a drone, a fixed wing aircraft, and/or the like. Of course, the hoist system 101 may also be implemented in static configurations, non-aircraft based configurations, and/or the like.

Referring to Figure 1, the hoist system 101 may include a hook 102 and a cable 104. The hook 102 may be positioned between the cable 104 and a hook portion 106. That is, the hook 102 may be connected to the cable 104 at its upper end, and may be connected to the hook portion 106 (or another object) on its lower end. As appreciated by one skilled in the art with the benefit of this disclosure, the hook 102 may be connected directly or indirectly to the cable 104 and the hook portion 106. For instance, as shown in Figure 1, a spring-interface device 108 may be connected between the cable 104 and the hook 102. In other aspects, the cable 104 may be connected directly to the hook portion 106. In other aspects, the cable 104 may be connected to the hook portion 106 through the spring-interface device 108. In other aspects, the cable 104 may be connected to the hook portion 106 through other intervening structure including mechanical fasteners.

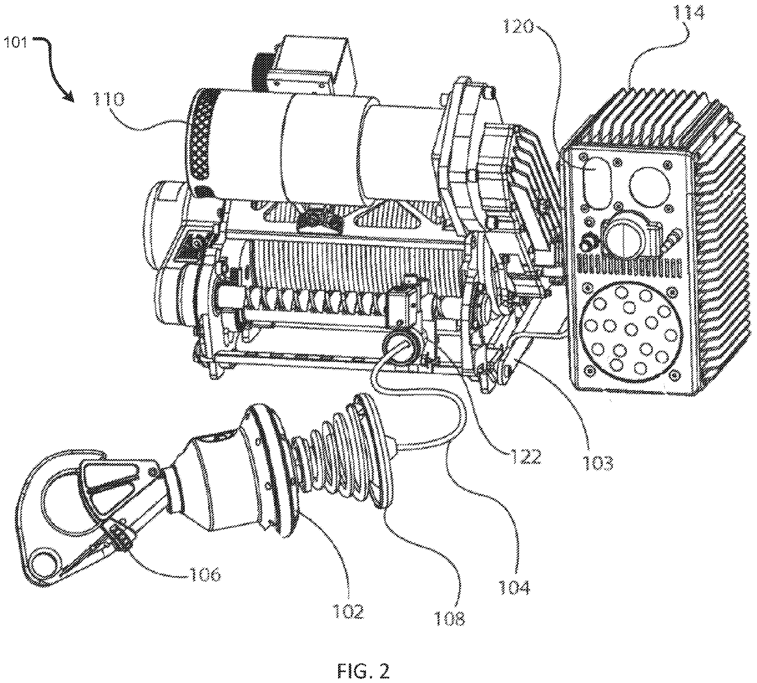

Figure 2 illustrates an enlarged view of components of the helicopter hoist system shown in Figure 1.

In particular, Figure 2 illustrates an enlarged view of the hoist system 101 shown in Figure 1, with the cable 104 in a generally retracted position. The hoist system 101 may include a frame 103 on which the hoist equipment may be directly or indirectly mounted including the cable 104, the hook 102, the hook portion 106, a motor 110, and/or the like. The hoist system 101 may include an electronic system 114 that may include a housing. The electronic system 114 may include communication systems, communication equipment, electronics and processing equipment, and/or the like.

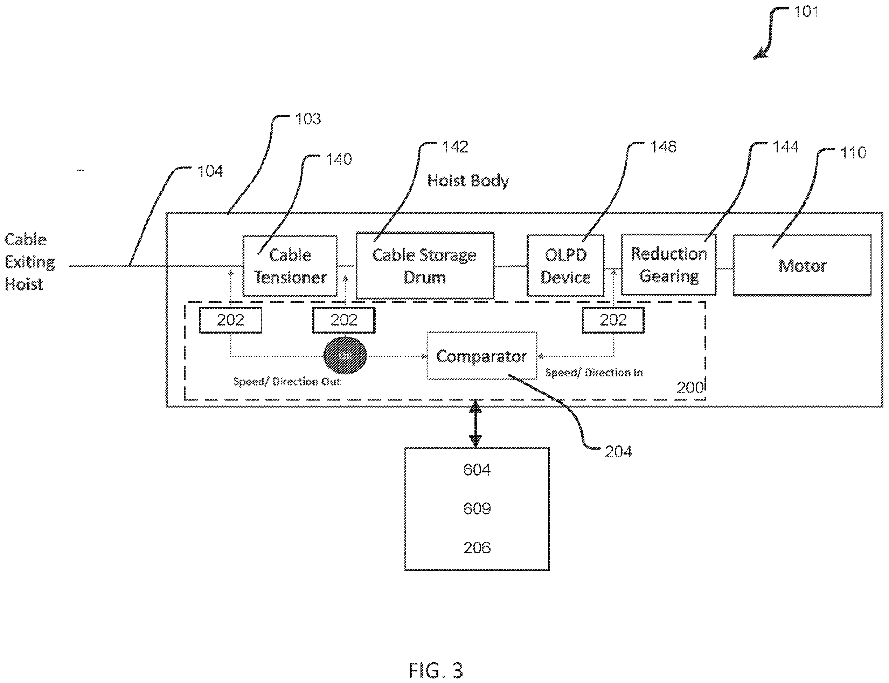

Additionally, the hoist system 101 may include an overload protection device (OLPD) slip detection system 200 (shown in Figure 3). The overload protection device (OLPD) slip detection system 200 may be implemented at least partially in the hoist system 101, or any associated components of the hoist system 101 including the frame 103, the electronic system 114, the helicopter, and/or the like.

The motor 110 may be a brushless motor, which may provide smoother raising and lowering of the cable 104. In another aspect, the motor 110 may include a high-performance variable-speed brushless permanent magnet rotary servomotor, with Universal AC or DC power input. In some aspects, the torque output may range between 5.6 Nm and 13.9 Nm. As appreciated by those skilled in the art, the torque range may vary and may be less than or more than 5.6 Nm and 13.9 Nm. In addition, any suitable motor or motors may be implemented as part of the hoist equipment. Additionally, the hoist system 101 may include reduction gearing 144, a cable storage drum 142, and/or the like as shown in Figure 3.

The electronic system 114 also may include a host of other electronic equipment, which are not shown in Figure 2, but are described in more detail below including communication systems, antenna, processing/control systems including image-processing systems, power-management systems, control systems, motor control systems, sensor systems, and/or the like.

Figure 3 illustrates a schematic of components of the helicopter hoist system shown in Figure 1.

In particular, Figure 3 illustrates further details of the hoist system 101 and the overload protection device (OLPD) slip detection system 200. In this regard, the overload protection device (OLPD) slip detection system 200 may be integrated into the hoist system 101, the overload protection device (OLPD) slip detection system 200 may be implemented separate from the hoist system 101, the overload protection device (OLPD) slip detection system 200 may be an aftermarket component that may be configured to be implemented and/or installed with the hoist system 101, and/or the like. The hoist system 101 may include the cable 104, a cable tensioner 140, the cable storage drum 142, an OLPD device 148, the reduction gearing 144, the motor 110, and/or the like.

The arrangement of the motor 110, the reduction gearing 144, the OLPD device 148, the cable storage drum 142, the cable tensioner 140, the cable 104, and the overload protection device (OLPD) slip detection system 200 of the hoist system 101 may be as illustrated in Figure 3. However, the arrangement may be different, include additional components, additional intervening components, fewer components, combined components, and/or the like.

In one aspect, the motor 110 may deliver a torque directly to the reduction gearing 144 or the motor 110 may deliver a torque to the reduction gearing 144 through an intermediate gear train or other component of the hoist system 101. In one aspect, the reduction gearing 144 may deliver a torque directly to the OLPD device 148 or the reduction gearing 144 may deliver a torque to the OLPD device 148 through an intermediate gear train or other component of the hoist system 101. In one aspect, the OLPD device 148 may deliver a torque directly to the cable storage drum 142 or the OLPD device 148 may deliver a torque to the cable storage drum 142 through an intermediate gear train or other component of the hoist system 101. In one aspect, the cable storage drum 142 may reel or unreel the cable 104 or the cable storage drum 142 may reel or unreel the cable 104 in conjunction with the cable tensioner 140.

As further illustrated in Figure 3, the overload protection device (OLPD) slip detection system 200 may include a sensor 202, a comparator 204, a processor 206, and/or the like. The overload protection device (OLPD) slip detection system 200 may include the processor 206 and/or may connect to one or more processor(s) 604 and/or may connect to a control system 609 as further described herein.

The OLPD device 148 may be configured to limit the loads that can be imparted on the hoist system 101 including the cable 104, the cable tensioner 140, the cable storage drum 142, the reduction gearing 144, the motor 110, and/or the like, therefore protecting the hoist system 101, the underslung load, and/or the like.

The OLPD device 148 may be implemented with one or more mechanical clutches. In this regard, the one or more mechanical clutches may be configured and designed to slip (OLPD activation) at a certain torsional range and allow the cable 104 to reel out from the cable storage drum 142 during overload events. More specifically, the OLPD device 148 may be configured and designed to receive a torque from the motor 110, the reduction gearing 144, and/or other components of the hoist system 101 and at a certain torsional range, the OLPD device 148 may prevent that torque from being delivered to other components of the hoist system 101 including the cable storage drum 142, the cable tensioner 140, the cable 104, other components of the hoist system 101, and/or the like (OLPD activation). In particular, the OLPD device 148 may allow the cable 104 to reel out (OLPD activation) from the cable storage drum 142 during overload events irrespective of operation of the motor 110.

Moreover, the helicopter hoist system 101 may implement reengagement of the OLPD device 148 after OLPD activation. In this regard, the one or more mechanical clutches may be configured and designed to stop slipping below the certain torsional range and allow the cable 104 to reel in and/or out from the cable storage drum 142 consistent with operation of the motor 110. In various aspects, the one or more mechanical clutches may be coupled to internal rotating components, and may be placed either adjacent to the cable storage drum 142, within the reduction gearing 144, an equivalent assembly, other components of the hoist system 101 and/or the like.

In various aspects, the hoist system 101 may implement the OLPD device 148 utilizing electrically activated clutches, using load detection devices or means, such as a load cell 306, that may be connected with electronics or processors, such as the processor 206, the one or more processor(s) 604, the control system 609 and/or the like such that the reduction gearing 144 and/or the motor 110 may become temporarily decoupled from the cable storage drum 142, the cable tensioner 140, the cable 104, and/or the like during an overload event (OLPD activation). In this regard, the OLPD device 148 utilizing the electrically activated clutches, the load detection devices or means, and/or the like may operate to some degree in an analogous manner as the OLPD device 148 implementing the one or more mechanical clutches noted above.

The cable storage drum 142 may be coupled mechanically to the reduction gearing 144 and powered by the motor 110. The motor 110 may be implemented as an electrical system as described above. Alternatively or additionally, the motor 110 may be implemented at least in part as a hydraulic system. Additionally, the hoist system 101 may include a number of other rotating components implemented internally to the hoist system 101 and/or externally to the hoist system 101.

The overload protection device (OLPD) slip detection system 200 may include devices or means for detecting activation of the OLPD device 148, a clutch activation, a component slip of the hoist system 101, and/or the like regardless of means or components of the hoist system 101. The overload protection device (OLPD) slip detection system 200 may include the sensor 202 configured as an OLPD activation sensor.

The hoist system 101 may implement the OLPD device 148 and the overload protection device (OLPD) slip detection system 200 together with the sensor 202 implemented as an OLPD activation sensor to detect slip action of the OLPD device 148 itself, via mechanically linked components, such as the cable storage drum 142, the cable tensioner 140, the cable 104, other components within the gear train of the hoist system 101, and/or the like.

The hoist system 101 may implement the OLPD device 148, the overload protection device (OLPD) slip detection system 200, the sensor 202, and/or the like with the comparator 204 in a configuration that compares movement of two or more of the motor 110, the reduction gearing 144, the OLPD device 148, the cable storage drum 142, the cable tensioner 140, the cable 104, and/or the like. For example, the hoist system 101 may implement the OLPD device 148, the overload protection device (OLPD) slip detection system 200, the sensor 202, and/or the like with the comparator 204 in a configuration that compares actual detected speeds of the cable 104, actual detected accelerations of the cable 104, and/or the like to actual detected speeds of the motor 110, the reduction gearing 144, the OLPD device 148, components upstream of the OLPD device 148, actual detected acceleration of the motor 110, the reduction gearing 144, the OLPD device 148, components upstream of the OLPD device 148, and/or the like.

The hoist system 101 and/or the overload protection device (OLPD) slip detection system 200 may implement the sensor 202 as the OLPD activation sensor and the sensor 202 may be a hall effect sensor, a resolver, similar technology coupled to mechanical components, and/or the like. Additionally or alternatively, the sensor 202 may be implemented as a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, a rotary encoder, and/or the like. The sensor 202 may be a movement sensor 322 that may be implemented as a speed sensor.

In one aspect, the sensor 202 senses rotational movement of the reduction gearing 144 where there is no slippage and/or upstream from the reduction gearing 144 where there is no slippage; and the sensor 202 senses rotational movement of the OLPD device 148 where there may be slippage and/or downstream from the OLPD device 148 where there may be slippage. In one aspect, as illustrated in Figure 3, the overload protection device (OLPD) slip detection system 200 may implement at least two of the sensor 202 in order to provide input to the comparator 204 and determine slippage.

In one aspect, the sensor 202 senses rotational movement of the motor 110. In one aspect, the sensor 202 senses rotational movement of gear train connected to the motor 110. In one aspect, the sensor 202 senses rotational movement of the reduction gearing 144. In one aspect, the sensor 202 senses rotational movement of gear train connected to the reduction gearing 144. In one aspect, the sensor 202 senses rotational movement of the OLPD device 148. In one aspect, the sensor 202 senses rotational movement of gear train connected to the OLPD device 148. In one aspect, the sensor 202 senses rotational movement of the cable storage drum 142. In one aspect, the sensor 202 senses rotational movement of gear train connected to the cable storage drum 142. In one aspect, the sensor 202 senses rotational movement of the cable tensioner 140. In one aspect, the sensor 202 senses rotational movement of gear train connected to the cable tensioner 140. In one aspect, the sensor 202 senses movement of the cable 104.

In order to determine slippage, the comparator 204 of the overload protection device (OLPD) slip detection system 200 may compare the output of a first one of the sensor 202 that senses rotational movement of the OLPD device 148 where there is no slippage and/or upstream from the OLPD device 148 where there is no slippage to a second one of the sensor 202 that senses rotational movement of the OLPD device 148 where there may be slippage and/or downstream from the OLPD device 148 where there may be slippage. In particular, when the output of the first one of the sensor 202 is different from the second one of the sensor 202 then it is likely that the OLPD device 148 has been activated. The comparison by the comparator 204 and/or the overload protection device (OLPD) slip detection system 200 may include various thresholds and/or sampling time periods to reduce false positive indications that the OLPD device 148 has been activated. Once the hoist system 101 and/or the overload protection device (OLPD) slip detection system 200 has determined that the OLPD device 148 has been activated, this may be signaled to the pilot, the crew, a display 115, the control system 609, the one or more processor(s) 604, the processor 206, and/or the like.

The hoist system 101 may implement the overload protection device (OLPD) slip detection system 200, the comparator 204, the sensor 202, the control system 609, the one or more processor(s) 604, the processor 206, and/or the like to implement an electronic comparison in conjunction with signal processing such as noise screening, filtering, and/or the like of sensor readings of the sensor 202 order to generate a signal indicating OLPD activation. For example, an electronic comparison in conjunction with signal processing such as noise screening, filtering, and/or the like of sensor readings of the sensor 202 that include accelerations and/or speeds before and after the OLPD device 148 in order to generate a signal indicating OLPD activation.

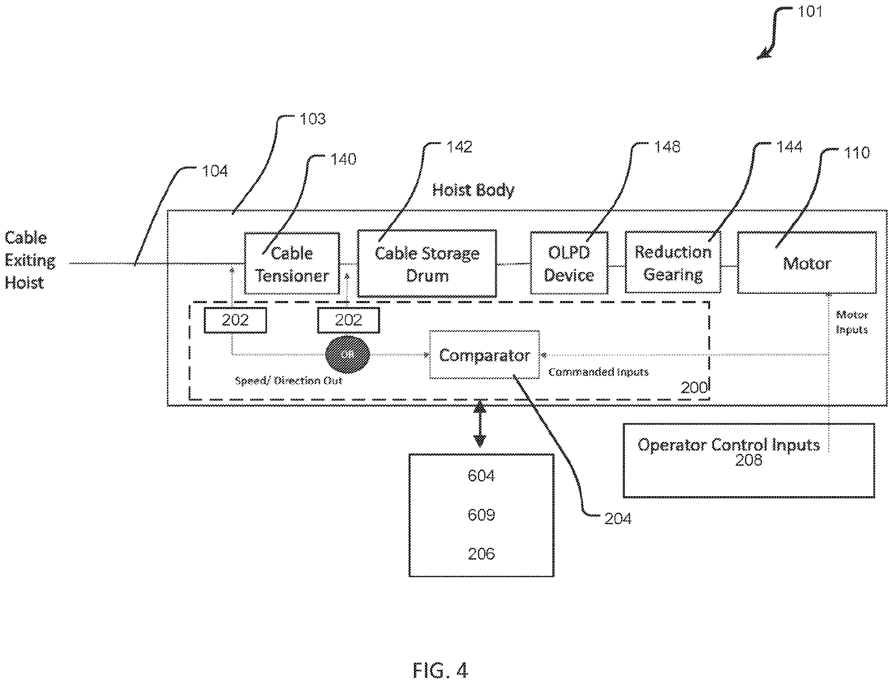

Figure 4 illustrates another schematic of components of the helicopter hoist system shown in Figure 1.

In particular, Figure 4 illustrates an implementation of the hoist system 101 and the overload protection device (OLPD) slip detection system 200 that may include any one or more features, functions, structures, devices, and/or the like as previously described. In this regard, the hoist system 101 may implement the overload protection device (OLPD) slip detection system 200 and the sensor 202 may measure movement, such as the actual speed and/or acceleration as previously described of the OLPD device 148 that may be subject to slippage and/or downstream of the OLPD device 148 in order to measure actual hoist cable speed, direction of movement, and/or the like.

Additionally, the overload protection device (OLPD) slip detection system 200 may further receive operator control inputs 208. The operator control inputs 208 may include actual commanded directions that may include an up command, a neutral command (no command), a down command, command for variable speeds in between, and/or the like. In this regard, the operator control inputs 208 may be provided to the motor 110 in order to control the hoist system 101 consistent with the operator control inputs 208.

Further, the overload protection device (OLPD) slip detection system 200 may be configured to process the signals of actual speeds, directions, and/or the like from the sensor 202 and these may be compared to the operator control inputs 208, which may include the actual commanded directions (up, neutral (no command), down, variable speeds in between, and/or the like).

For example, speed of any component of the hoist system 101 may be integrated electronically to obtain measures of downward acceleration. Comparing downward accelerations of the cable 104 versus up or neutral input commands may result in analogous detection of activation of the OLPD device 148. Downward speed exceedances versus downward input commands may also result in analogous detection of OLPD activation.

More generally, when a movement indicated by the output the sensor 202 is different from a movement commanded by the operator control inputs 208 then it is likely that the OLPD device 148 has been activated. The comparison by the comparator 204 and/or the overload protection device (OLPD) slip detection system 200 may include various thresholds and/or sampling time periods to reduce false positive indications that the OLPD device 148 has been activated. Once the hoist system 101 and/or the overload protection device (OLPD) slip detection system 200 has determined that the OLPD device 148 has been activated, this may be signaled to the pilot, the crew, a display 115, the control system 609, the one or more processor(s) 604, the processor 206, and/or the like.

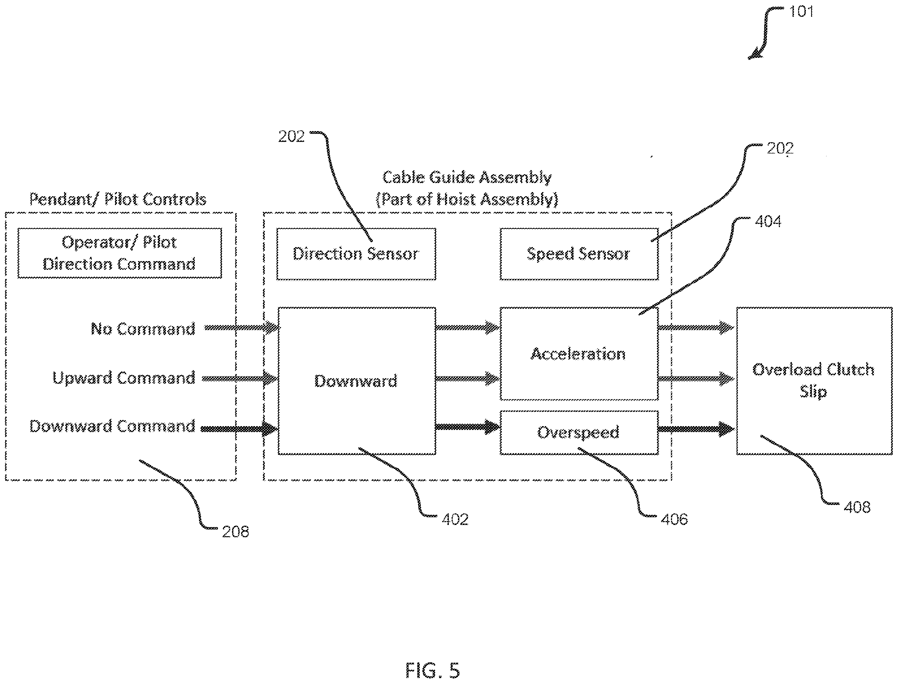

Figure 5 illustrates an exemplary process flow of the helicopter hoist system implementing the aspects of Figure 4.

In particular, Figure 5 illustrates the operator control inputs 208 that may be input to the hoist system 101, a downward direction determination 402 by the sensor 202 implemented as a direction sensor, an acceleration determination 404 by the sensor 202 implemented as a speed sensor, an overspeed determination 406 by the sensor 202 implemented as a speed sensor, and an overload clutch slip determination 408 based on the downward direction determination 402, the overspeed determination 406, the acceleration determination 404, the operator control inputs 208, and/or the like.

The operator control inputs 208 may include actual commanded directions that may include an up command, a neutral command (no command), a down command, command for variable speeds in between, and/or the like. In particular, the operator control inputs 208 may be commands for operation of the motor 110 of the hoist system 101.

With reference to Figure 5, the operator control inputs 208 may include a neutral command (no command) and if there is the downward direction determination 402 and/or the acceleration determination 404 then the result is an overload clutch slip determination 408. The overload clutch slip determination 408 may be signaled to the pilot, the crew, the display 115, the control system 609, the one or more processor(s) 604, the processor 206, and/or the like.

With further reference to Figure 5, the operator control inputs 208 may include an up command and if there is a downward direction determination 402 and/or an acceleration determination 404 then the result is an overload clutch slip determination 408. The overload clutch slip determination 408 may be signaled to the pilot, the crew, the display 115, the control system 609, the one or more processor(s) 604, the processor 206, and/or the like.

The operator control inputs 208 may include a down command and if there is an overspeed determination 406, the result is an overload clutch slip determination 408. The overload clutch slip determination 408 may be signaled to the pilot, the crew, the display 115, the control system 609, the one or more processor(s) 604, the processor 206, and/or the like.

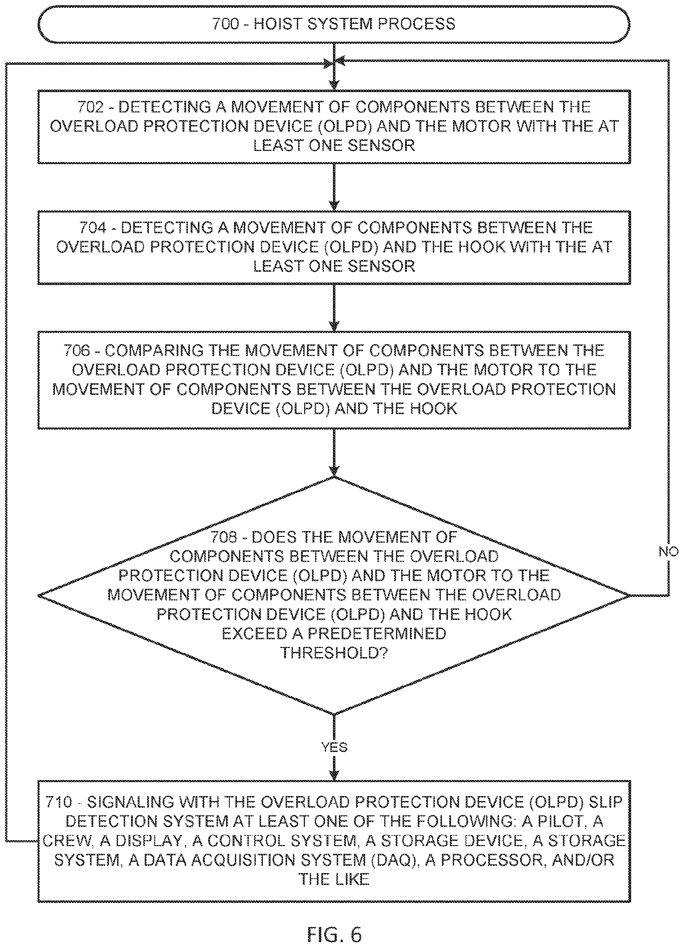

Figure 6 illustrates an exemplary slip detection process in accordance with aspects of the disclosure.

In particular, Figure 6 illustrates a hoist system process 700 as a collection of blocks in a logical flow graph, which represent a sequence of operations that can be implemented in hardware, software, or a combination thereof. In the context of software, the blocks may represent computer-executable instructions that, when executed by one or more processors, perform the recited operations. Generally, computer-executable instructions may include routines, programs, objects, components, data structures, and/or the like that perform particular functions or implement particular abstract data types. The order in which the operations are described is not intended to be construed as a limitation, and any number of the described blocks can be combined in any order and/or in parallel to implement the process. Also, one or more of the described blocks may be omitted without departing from the scope of the present disclosure. Additionally, it should be noted that the hoist system process 700 is merely exemplary and may be modified consistent with the various aspects disclosed herein.

The hoist system process 700 may include detecting a movement of components between the overload protection device (OLPD) and the motor with the at least one sensor 702. In particular, detecting a movement of components between the overload protection device (OLPD) and the motor with the at least one sensor 702 utilizing the overload protection device (OLPD) slip detection system 200, the sensor 202, a comparator 204, the processor 206, and/or the like as described herein.

The hoist system process 700 may include detecting a movement of components between the overload protection device (OLPD) and the hook with the at least one sensor 704. In particular, detecting a movement of components between the overload protection device (OLPD) and the hook with the at least one sensor 704utilizing the overload protection device (OLPD) slip detection system 200, the sensor 202, a comparator 204, the processor 206, and/or the like as described herein.

The hoist system process 700 may include comparing the movement of components between the overload protection device (OLPD) and the motor to the movement of components between the overload protection device (OLPD) and the hook 706. In particular, comparing the movement of components between the overload protection device (OLPD) and the motor to the movement of components between the overload protection device (OLPD) and the hook 706 utilizing the overload protection device (OLPD) slip detection system 200, the sensor 202, a comparator 204, the processor 206, and/or the like as described herein.

The hoist system process 700 may include determining whether the movement of components between the overload protection device (OLPD) and the motor to the movement of components between the overload protection device (OLPD) and the hook exceed a predetermined threshold 708. In particular, determining whether the movement of components between the overload protection device (OLPD) and the motor to the movement of components between the overload protection device (OLPD) and the hook exceed a predetermined threshold 708 utilizing the overload protection device (OLPD) slip detection system 200, the sensor 202, a comparator 204, the processor 206, and/or the like as described herein. If the movement of components between the overload protection device (OLPD) and the motor to the movement of components between the overload protection device (OLPD) and the hook exceeds a predetermined threshold 708, then the process advances to box 710 otherwise, the process loops back to box 702.

The hoist system process 700 may include signaling with the overload protection device (OLPD) slip detection system at least one of the following: a pilot, a crew, a display, a control system, a storage device, a storage system, a data acquisition system (DAQ), and/or a processor 710 when the movement of components between the overload protection device (OLPD) and the motor to the movement of components between the overload protection device (OLPD) and the hook exceeds a predetermined threshold 708. In particular, signaling with the overload protection device (OLPD) slip detection system at least one of the following: a pilot, a crew, a display, a control system, a storage device, a storage system, a data acquisition system (DAQ), and/or a processor 710 utilizing the overload protection device (OLPD) slip detection system 200, the sensor 202, a comparator 204, the processor 206, and/or the like as described herein.

As may be appreciated by those skilled in the art, the illustrated structure is a logical structure and not a physical one. Accordingly, the illustrated modules can be implemented by employing various hardware and software components. In addition, two or more of the logical components can be implemented as a single module that provides functionality for both components. In one aspect, the components are implemented as software program modules.

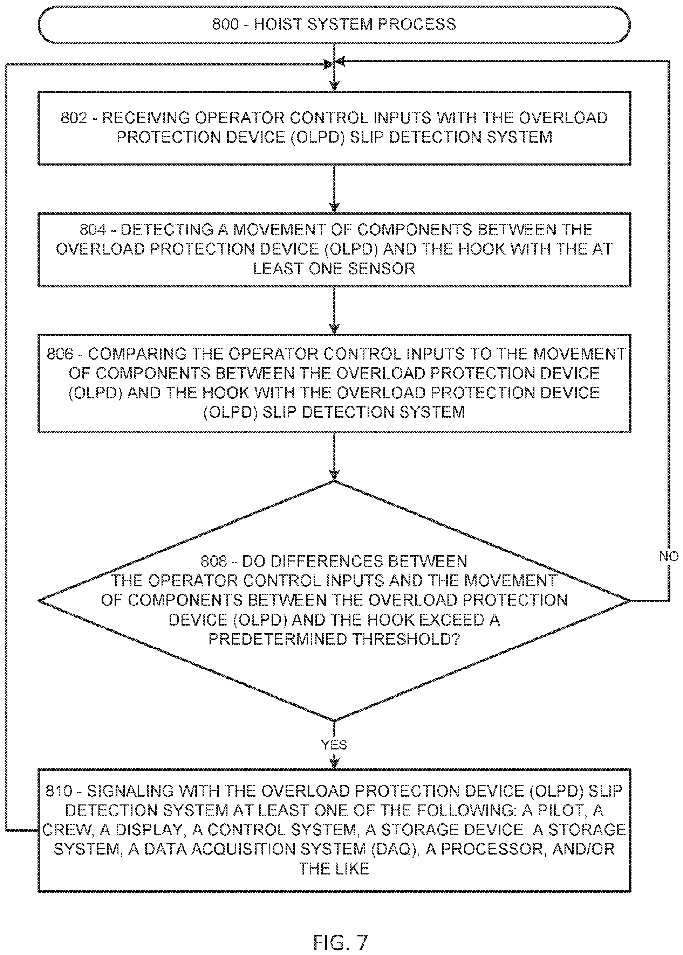

Figure 7 illustrates an exemplary slip detection process in accordance with aspects of the disclosure.

In particular, Figure 7 illustrates a hoist system process 800 as a collection of blocks in a logical flow graph, which represent a sequence of operations that can be implemented in hardware, software, or a combination thereof. In the context of software, the blocks may represent computer-executable instructions that, when executed by one or more processors, perform the recited operations. Generally, computer-executable instructions may include routines, programs, objects, components, data structures, and/or the like that perform particular functions or implement particular abstract data types. The order in which the operations are described is not intended to be construed as a limitation, and any number of the described blocks can be combined in any order and/or in parallel to implement the process. Also, one or more of the described blocks may be omitted without departing from the scope of the present disclosure. Additionally, it should be noted that the hoist system process 800 is merely exemplary and may be modified consistent with the various aspects disclosed herein.

The hoist system process 800 may include receiving operator control inputs with the overload protection device (OLPD) slip detection system 802. In particular, receiving operator control inputs with the overload protection device (OLPD) slip detection system 802 utilizing the overload protection device (OLPD) slip detection system 200, the sensor 202, a comparator 204, the processor 206, and/or the like as described herein.

The hoist system process 800 may include detecting a movement of components between the overload protection device (OLPD) and the hook with the at least one sensor 804. In particular, detecting a movement of components between the overload protection device (OLPD) and the hook with the at least one sensor 804 utilizing the overload protection device (OLPD) slip detection system 200, the sensor 202, a comparator 204, the processor 206, and/or the like as described herein.

The hoist system process 800 may include comparing the operator control inputs to the movement of components between the overload protection device (OLPD) and the hook with the overload protection device (OLPD) slip detection system 806. In particular, comparing the operator control inputs to the movement of components between the overload protection device (OLPD) and the hook with the overload protection device (OLPD) slip detection system 806 utilizing the overload protection device (OLPD) slip detection system 200, the sensor 202, a comparator 204, the processor 206, and/or the like as described herein.

The hoist system process 800 may include determining whether differences between the operator control inputs and the movement of components between the overload protection device (OLPD) and the hook exceed a predetermined threshold 808. If the differences between the operator control inputs and the movement of components between the overload protection device (OLPD) and the hook exceed a predetermined threshold 808, then the process advances to box 810 otherwise, the process loops back to box 802. In particular, determining whether differences between the operator control inputs and the movement of components between the overload protection device (OLPD) and the hook exceed a predetermined threshold 808 utilizing the overload protection device (OLPD) slip detection system 200, the sensor 202, a comparator 204, the processor 206, and/or the like as described herein.

The hoist system process 800 may include signaling with the overload protection device (OLPD) slip detection system at least one of the following: a pilot, a crew, a display, a control system, a storage device, a storage system, a data acquisition system (DAQ), a processor 710, and/or the like when the differences between the operator control inputs and the movement of components between the overload protection device (OLPD) and the hook exceed a predetermined threshold 808. In particular, signaling with the overload protection device (OLPD) slip detection system at least one of the following: a pilot, a crew, a display, a control system, a storage device, a storage system, a data acquisition system (DAQ), and/or a processor 710 utilizing the overload protection device (OLPD) slip detection system 200, the sensor 202, a comparator 204, the processor 206, and/or the like as described herein.

As may be appreciated by those skilled in the art, the illustrated structure is a logical structure and not a physical one. Accordingly, the illustrated modules can be implemented by employing various hardware and software components. In addition, two or more of the logical components can be implemented as a single module that provides functionality for both components. In one aspect, the components are implemented as software program modules.

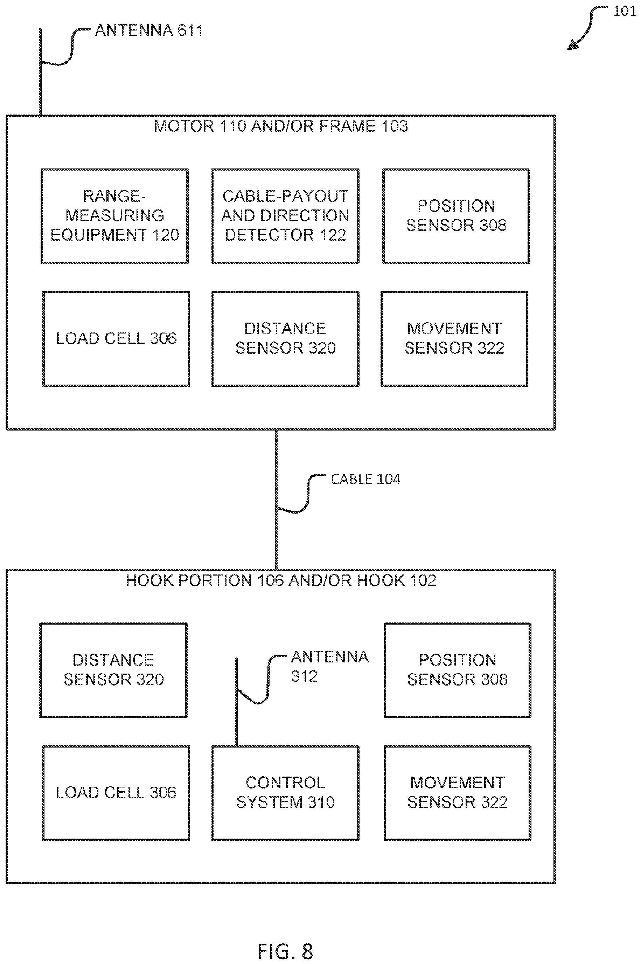

Figure 8 illustrates a block diagram illustrating select components of an example helicopter hoist system in accordance with aspects of the disclosure.

The hoist system 101 and/or the overload protection device (OLPD) slip detection system 200 may include one or more sensors to measure a load on the cable 104, the hook portion 106, and/or the hook 102. In one aspect, the hoist system 101 may include a load cell 306 associated with the motor 110, the frame 103, and/or the like. In one aspect, the load cell 306 may be integrated in the hook 102 and/or the hook portion 106. However, the one or more sensors to measure a load on the cable 104, the hook portion 106, and/or the hook 102 may be implemented using other sensor technology and/or arranged in other locations.

The load cell 306 may be implemented as a transducer that is used to create an electrical signal whose magnitude is directly proportional to or a function of the force being measured. The load cell 306 may be implemented as a hydraulic, a pneumatic, and/or a strain gauge load cell. The load cell 306 measures a force provided by the load. That is, the load cell 306 is positioned in a load path associated with the hook 102, the hook portion 106, and/or cable 104. As appreciated by one skilled in the art after having the benefit of this disclosure, the load cell 306 can have any construction and be positioned in hook 102, the hook portion 106, along the cable 104, the motor 110, the frame 103, and/or the like in any suitable manner to acquire load data.

The hoist system 101 and/or the overload protection device (OLPD) slip detection system 200 may include one or more sensors to measure a movement of the cable 104, the hook portion 106, and/or the hook 102 with respect to the helicopter 100. In one aspect, the hoist system 101 may include a position sensor 308 associated with the motor 110, the frame 103, the cable 104, the hook portion 106, the hook 102, and/or the like. The position sensor 308 may be implemented as capacitive transducer, capacitive displacement sensor, eddy-current sensor, ultrasonic sensor, grating sensor, hall effect sensor, inductive non-contact position sensors, laser doppler vibrometer (optical), linear variable differential transformer (LVDT), multi-axis displacement transducer, photodiode array, piezo-electric transducer (piezo-electric), potentiometer, proximity sensor (optical), rotary encoder (angular), string potentiometer, string encoder, cable position transducer, linear encoder, rotary encoder, and/or the like.

In one aspect, the position sensor 308 may be integrated in the hook 102 and/or the hook portion 106 and may be implemented as an inertial measurement unit (IMU). In one aspect, the distance sensor 320 may be integrated in the hook 102 and/or the hook portion 106 and may be implemented as a location determination device implemented as global navigation satellite system (GNSS) receiver.

The hoist system 101 may include one or more sensors to measure a length or distance of the cable 104, the hook portion 106, and/or the hook 102 from the helicopter 100. In one aspect, the hoist system 101 may include a distance sensor 320 associated with the motor 110, the frame 103, the cable 104, the hook portion 106, the hook 102, and/or the like. In one aspect, the hoist system 101 may associate the distance sensor 320 with the motor 110 and measure rotations of the motor 110 to determine a length of the cable 104 or the like. In one aspect, the hoist system 101 may associate the distance sensor 320 with the motor 110 and determine a length of the cable 104 payout or the like. The distance sensor 320 may be implemented as capacitive transducer, capacitive displacement sensor, eddy-current sensor, ultrasonic sensor, grating sensor, hall effect sensor, inductive non-contact position sensors, laser doppler vibrometer (optical), linear variable differential transformer (LVDT), multi-axis displacement transducer, photodiode array, piezo-electric transducer (piezo-electric), potentiometer, proximity sensor (optical), rotary encoder (angular), string potentiometer, string encoder, cable position transducer, linear encoder, rotary encoder, and/or the like.

In one aspect, the distance sensor 320 may be integrated in the hook 102 and/or the hook portion 106 and may be implemented as an inertial measurement unit (IMU). In one aspect, the distance sensor 320 may be integrated in the hook 102 and/or the hook portion 106 and may be implemented as a location determination device implemented as global navigation satellite system (GNSS) receiver. In one aspect, the hoist system 101 may also include range-measuring equipment 120 (such as a laser-range finder) for determining the distance of the hook 102 from the helicopter 100, and as well as the distance of objects or ground/water from helicopter 100. In one aspect, the hoist system 101 may also include a cable-payout and direction detector 122, which measures the distance the cable 104 is extended and a direction the cable 104 is moving (i.e., up or down).

In some aspects, the hook 102 may include a control system 310. The control system 310 may be configured to measure and transmit the load on the hook, altitude of the assembly above ground or water, position and/or directionality of the assembly, and/or other information utilizing sensors as described above or other types of sensors known to one of ordinary skill in the art. In some aspects, the load and sensor data may be stored in any suitable-memory-storage device within hook 102. In one aspect, an antenna 312 together with the transceiver serves as a means for communicating wirelessly between the control system 310 and other systems located in helicopter 100 or elsewhere utilizing a communication channel as defined herein. A data port may also serve as a means for communicating with other computing devices including memory storage devices.

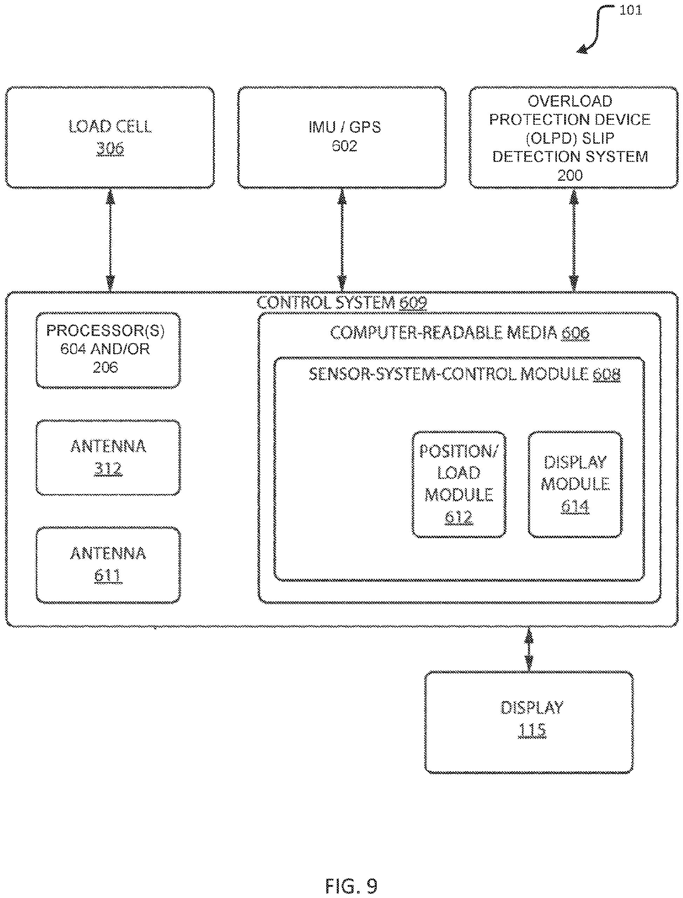

Figure 9 illustrates a block diagram illustrating select components of an example helicopter hoist system in accordance with aspects of the disclosure.

In particular, Figure 9 is a block diagram illustrating select components of the hoist system 101 and/or the overload protection device (OLPD) slip detection system 200 that facilitate the interoperability of the hoist system 101. As shown in Figure 5, the hoist system 101 may include the control system 609, which may control and monitor the overload protection device (OLPD) slip detection system 200, the hook 102, and/or other systems/devices associated with the hoist system 101 as described in the disclosure.

Although the control system 609 is illustrated as a discrete block, it is appreciated by those skilled in the art with the benefit of this disclosure, that the control system 609 may reside at various times across different components of the hoist system 101. For instance, the control system 609 may be implemented and reside as a component of the hook 102, may be also be implemented and reside in the electronic system 114, across other devices remote from the hook 102 and the electronic system 114, and/or the like.

Thus, in a general sense, those skilled in the art will recognize that the various control systems described in the hoist system 101 can be implemented individually or collectively by a wide range of electrical, mechanical, optical, processing (including hardware, software, firmware, and/or virtually any combination thereof), and various combinations of the foregoing.

Furthermore, various elements located in the hook 102 may communicate via antenna 312 in the hook 102 with the overload protection device (OLPD) slip detection system 200, components resident in the electronic system 114, and/or other component remote from the electronic system 114, such as located in the helicopter 100. An antenna 611 implemented with a transceiver associated with the hoist system 101 may provide a mechanism for transmitting and receiving data to/from the hook 102, and other devices. Thus, even though the control system 310 is shown apart from the control system 609, it is appreciated by those skilled in the art with the benefit of this disclosure that the control system 310 may form an integral part of the control system 609 for the hoist system 101. In addition, although wireless communication via antennae is described, it is appreciated that wired communication may be used between the hook 102 and other elements of the hoist system 101.

As depicted in Figure 9, the control system 609 represents any suitable computer device(s) having the one or more processor(s) 604 and the ability to access the computer-readable media 606 to execute instructions or code that controls the hook 102, as well as other devices associated with the hoist system 101. The processor(s) 604 may be located in the electronic system 114 and may be embodied as any suitable electrical circuit, computing processor including special integrated circuits, ASICs, FPGAs, microcontrollers, processor, co-processor, microprocessor, controllers, or other processing means. The processor(s) 604 may also be embedded in the hook 102.

The processor(s) 604 may be distributed in more than one computer system and over a network utilizing a transceiver operating on a communication channel as defined herein (not shown). Examples of the computer systems may include, but are not limited to, a server, personal computer, distributed computer systems, or other computing devices having access to processors and computer-readable medial. Further, although not shown, any number of system busses, communication and peripheral interfaces, input/output devices, and other devices may be included in the control system 609 (including the control system 310), as appreciated by those skilled in the art.

Still referring to Figure 9, the computer-readable media 606 may include any suitable computer-storage media including volatile and non-volatile memory, and any combination thereof. For example, computer storage media includes volatile and non-volatile, removable and non-removable media implemented in any method or technology for storage of information such as computer readable instructions, data structures, program modules, or other data. Computer storage media may further include, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory or non-transmission medium that can be used to store information for access by a computing device. In one aspect, the computer-readable media 606 stores the hoist system process 700 and/or the hoist system process 800 as described herein.

In other examples, the computer-readable media 606 may include communication media that may embody computer readable instructions, data structures, program modules, or other data in a modulated data signal, such as a carrier wave, or other transmission mechanism. In one aspect, the computer-readable media 606 may be implemented as a computer program product having instructions and configured to be executed by the control system 609 and/or the processor(s) 604.

Further, the computer-readable media 606 may be local and/or offsite to computer systems (not shown). For instance, one or more portions of, or all of data or code stored in the computer-readable media 606, may be accessed from a computer-storage medium local to and/or remote to the control system 609, such as from a storage medium connected to a network.

Resident in the computer-readable media 606 may be one or more operating systems (not shown), and any number of other program applications or modules in the form of computer-executable instructions and/or logic which are executed on the processor(s) 604 to enable processing of data or other functionality.

Still referring to Figure 9, the control system 609 may be configured with a sensor-system-control module 608 that may be maintained in the computer-readable media 606. In one example, the sensor-system-control module 608 may be implemented as code in the form of computer-readable instructions that execute on the processor(s) 604. For purposes of illustration, programs and other executable-program modules are illustrated herein as discrete blocks, although it is recognized that such programs and components may reside at various times in different storage components. Further, such code may be implemented as one or more applications or modules, or may be integrated as components within a single application. Such code stored in the computer-readable media 606 may be implemented across one or more computers in a cloud computing environment, on a local device or system, or on a combination of both. The following discussion does not limit the implementation of code stored in the computer-readable media 606 to any particular device or environment.

The sensor-system-control module 608 may include components contained in the computer-readable media 606. In one example, the sensor-system-control module 608 may include a position/load module 612 and a display module 614.

In one aspect, the position/load module 612 facilitates a mode of operation of the control system 609 in which the position/load module 612 monitors measurements made by the overload protection device (OLPD) slip detection system 200, the sensor 202, the load measurement sensors such as the load cell 306, the cable movement measurement sensors such as the distance sensor 320, the cable-payout and direction detector 122 and/or the range-measuring equipment 120, and/or the like. In one aspect, the position/load module 612 facilitates a mode of operation of the control system 609 in which the position/load module 612 monitors measurements made by an inertial measurement unit (IMU) and/or global positioning unit (GPS) (collectively referred to herein as IMU/GPS 602) located in the hook 102 and/or the electronic system 114. The position/load module 612 may also record these measurements (i.e., data) generated by the IMU/GPS 602, and transmit these measurements to the hoist system 101 as well as other monitoring devices, such as located in the helicopter 100.

The IMU/GPS 602 may be in communication with the position/load module 612 and enable the control system 609 to monitor a location and/or relative motion of the hook 102 and/or the hook portion 106 in three-dimensional coordinate space relative to the helicopter.

Thus, the combination of one or more of the load measurement sensors such as the load cell 306, the cable movement measurement sensors such as the distance sensor 320, the cable-payout and direction detector 122 and/or the range-measuring equipment 120, the load cell 306, the IMU/GPS 602 under control of the control system 609 (including control system 310 individually or in combination with system 609 as a whole), and the like allow for complete mapping of the hook 102--and hook load--in 3D coordinate space and relative to the airframe (helicopter and/or hoist). With cable payout information, the hoist cable fleet angle and/or the like may also be calculated. This data may be used to understand the load conditions on the hoist and helicopter airframe.

Accordingly, the disclosure has provided a system and process to address situations where portions of the lifting device may slip responsive to mechanical systems attempting to address various load forces. In particular, a system and process to provide slip detection information to a pilot, a crew, a helicopter system, and/or the like to ensure safe operation of the aircraft and a safety of the load.

The following are a number of nonlimiting Examples of aspects of the disclosure.

One example includes a hoist system that includes a hook; a cable connected to the hook; a motor configured to move the hook and the cable; an overload protection device (OLPD) configured to limit loads imparted on one or more of the hook, the cable, and the motor; and an overload protection device (OLPD) slip detection system configured to detect activation of the overload protection device (OLPD).

The above-noted Example may further include any one or a combination of more than one of the following aspects. The hoist system where when the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), and/or a processor. The overload protection device (OLPD) slip detection system includes at least one sensor implemented as an OLPD activation sensor to detect activation of the overload protection device (OLPD). The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The overload protection device (OLPD) slip detection system includes at least one sensor and a comparator, where the at least one sensor is configured to detect a movement of components between the overload protection device (OLPD) and the motor, where the at least one sensor is configured to detect a movement of components between the overload protection device (OLPD) and the hook, and where the comparator compares the movement of components between the overload protection device (OLPD) and the motor to the movement of components between the overload protection device (OLPD) and the hook to detect activation of the overload protection device (OLPD). When the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), a processor, and/or the like. The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The overload protection device (OLPD) slip detection system is configured to receive operator control inputs; where the at least one sensor is configured to detect a movement of components between the overload protection device (OLPD) and the hook; and where the overload protection device (OLPD) slip detection system is configured to compare the operator control inputs to the movement of components between the overload protection device (OLPD) and the hook to detect activation of the overload protection device (OLPD). When the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), a processor, and/or the like. The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The overload protection device (OLPD) is configured to implement OLPD activation to start slipping above a certain torsional range, and where the overload protection device (OLPD) is configured to reengage after OLPD activation to stop slipping below a certain torsional range. The overload protection device (OLPD) is configured to implement OLPD activation to start slipping above a certain torsional range. The overload protection device (OLPD) is configured to reengage after OLPD activation to stop slipping below a certain torsional range. The overload protection device (OLPD) is configured with one or more mechanical clutches. The overload protection device (OLPD) is configured with electrically activated clutches.

One example includes a hoist system that includes a hook; a cable connected to the hook; a motor configured to move the hook and the cable; an overload protection device (OLPD) configured to limit loads imparted on one or more of the hook, the cable, and the motor; and an overload protection device (OLPD) slip detection system configured to detect activation of the overload protection device (OLPD), where when the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), a processor, and/or the like.

The above-noted Example may further include any one or a combination of more than one of the following aspects. The hoist system where the overload protection device (OLPD) slip detection system includes at least one sensor implemented as an OLPD activation sensor to detect activation of the overload protection device (OLPD). The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The overload protection device (OLPD) slip detection system includes at least one sensor and a comparator, where the at least one sensor is configured to detect a movement of components between the overload protection device (OLPD) and the motor, where the at least one sensor is configured to detect a movement of components between the overload protection device (OLPD) and the hook, and where the comparator compares the movement of components between the overload protection device (OLPD) and the motor to the movement of components between the overload protection device (OLPD) and the hook to detect activation of the overload protection device (OLPD). The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The overload protection device (OLPD) slip detection system is configured to receive operator control inputs; where the at least one sensor is configured to detect a movement of components between the overload protection device (OLPD) and the hook; and where the overload protection device (OLPD) slip detection system is configured to compare the operator control inputs to the movement of components between the overload protection device (OLPD) and the hook to detect activation of the overload protection device (OLPD). The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The overload protection device (OLPD) is configured to implement OLPD activation to start slipping above a certain torsional range, and where the overload protection device (OLPD) is configured to reengage after OLPD activation to stop slipping below a certain torsional range. The overload protection device (OLPD) is configured to implement OLPD activation to start slipping above a certain torsional range. The overload protection device (OLPD) is configured to reengage after OLPD activation to stop slipping below a certain torsional range. The overload protection device (OLPD) is configured with one or more mechanical clutches. The overload protection device (OLPD) is configured with electrically activated clutches.

One example includes a hoist system process that includes providing a hook; providing a cable connected to the hook; providing a motor configured to move the hook and the cable; limiting loads imparted on one or more of the hook, the cable, and the motor with an overload protection device (OLPD); and detecting activation of the overload protection device (OLPD) with an overload protection device (OLPD) slip detection system.

The above-noted Example may further include any one or a combination of more than one of the following aspects. The hoist system process includes: determining with the overload protection device (OLPD) slip detection system that the overload protection device (OLPD) has been activated; and signaling with the overload protection device (OLPD) slip detection system at least one of the following: a pilot, a crew, a display, a control system, a storage device, a storage system, a data acquisition system (DAQ), a processor, and/or the like. The overload protection device (OLPD) slip detection system includes at least one sensor implemented as an OLPD activation sensor to detect activation of the overload protection device (OLPD). The at least one sensor includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The hoist system process includes: implementing the overload protection device (OLPD) slip detection system with at least one sensor and a comparator, detecting a movement of components between the overload protection device (OLPD) and the motor with the at least one sensor, detecting a movement of components between the overload protection device (OLPD) and the hook with the at least one sensor, and comparing the movement of components between the overload protection device (OLPD) and the motor to the movement of components between the overload protection device (OLPD) and the hook to detect activation of the overload protection device (OLPD) with the comparator. When the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), a processor, and/or the like. The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The hoist system process includes: implementing at least one sensor, receiving operator control inputs with the overload protection device (OLPD) slip detection system; detecting a movement of components between the overload protection device (OLPD) and the hook with the at least one sensor; and comparing the operator control inputs to the movement of components between the overload protection device (OLPD) and the hook with the overload protection device (OLPD) slip detection system to detect activation of the overload protection device (OLPD). When the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), a processor, and/or the like. The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The overload protection device (OLPD) is configured to implement OLPD activation to start slipping above a certain torsional range, and where the overload protection device (OLPD) is configured to reengage after OLPD activation to stop slipping below a certain torsional range. The overload protection device (OLPD) is configured to implement OLPD activation to start slipping above a certain torsional range. The overload protection device (OLPD) is configured to reengage after OLPD activation to stop slipping below a certain torsional range. The overload protection device (OLPD) is configured with one or more mechanical clutches. The overload protection device (OLPD) is configured with electrically activated clutches.

One example includes a hoist system process that includes providing a hook; providing a cable connected to the hook; providing a motor configured to move the hook and the cable; limiting loads imparted on one or more of the hook, the cable, and the motor with an overload protection device (OLPD); detecting activation of the overload protection device (OLPD) with an overload protection device (OLPD) slip detection system; and determining with the overload protection device (OLPD) slip detection system that the overload protection device (OLPD) has been activated.

The above-noted Example may further include any one or a combination of more than one of the following aspects. The hoist system process where the overload protection device (OLPD) slip detection system includes at least one sensor implemented as an OLPD activation sensor to detect activation of the overload protection device (OLPD). The at least one sensor includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The hoist system process includes: implementing the overload protection device (OLPD) slip detection system with at least one sensor and a comparator, detecting a movement of components between the overload protection device (OLPD) and the motor with the at least one sensor, detecting a movement of components between the overload protection device (OLPD) and the hook with the at least one sensor, and comparing the movement of components between the overload protection device (OLPD) and the motor to the movement of components between the overload protection device (OLPD) and the hook to detect activation of the overload protection device (OLPD) with the comparator. The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The hoist system process includes: implementing at least one sensor, receiving operator control inputs with the overload protection device (OLPD) slip detection system; detecting a movement of components between the overload protection device (OLPD) and the hook with the at least one sensor; and comparing the operator control inputs to the movement of components between the overload protection device (OLPD) and the hook with the overload protection device (OLPD) slip detection system to detect activation of the overload protection device (OLPD). The at least one sensor is configured to detect a movement and includes at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder. The overload protection device (OLPD) is configured to implement OLPD activation to start slipping above a certain torsional range, and where the overload protection device (OLPD) is configured to reengage after OLPD activation to stop slipping below a certain torsional range. The overload protection device (OLPD) is configured to implement OLPD activation to start slipping above a certain torsional range. The overload protection device (OLPD) is configured to reengage after OLPD activation to stop slipping below a certain torsional range. The overload protection device (OLPD) is configured with one or more mechanical clutches. The overload protection device (OLPD) is configured with electrically activated clutches.

The disclosure may be implemented in any type of computing devices, such as, e.g., a desktop computer, personal computer, a laptop/mobile computer, a personal data assistant (PDA), a mobile phone, a tablet computer, cloud computing device, and the like, with wired/wireless communications capabilities via the communication channels.

Further in accordance with various aspects of the disclosure, the methods described herein are intended for operation with dedicated hardware implementations including, but not limited to, PCs, PDAs, semiconductors, application specific integrated circuits (ASIC), programmable logic arrays, cloud computing devices, and other hardware devices constructed to implement the methods described herein.

It should also be noted that the software implementations of the disclosure as described herein are optionally stored on a tangible storage medium, such as: a magnetic medium such as a disk or tape; a magneto-optical or optical medium such as a disk; or a solid state medium such as a memory card or other package that houses one or more read-only (non-volatile) memories, random access memories, or other re-writable (volatile) memories. A digital file attachment to email or other self-contained information archive or set of archives is considered a distribution medium equivalent to a tangible storage medium. Accordingly, the disclosure is considered to include a tangible storage medium or distribution medium, as listed herein and including art-recognized equivalents and successor media, in which the software implementations herein are stored.

Additionally, the various aspects of the disclosure may be implemented in a non-generic computer implementation. Moreover, the various aspects of the disclosure set forth herein improve the functioning of the system as is apparent from the disclosure hereof. Furthermore, the various aspects of the disclosure involve computer hardware that it specifically programmed to solve the complex problem addressed by the disclosure. Accordingly, the various aspects of the disclosure improve the functioning of the system overall in its specific implementation to perform the process set forth by the disclosure and as defined by the claims.

Aspects of the disclosure may be implemented in any type of computing devices, such as, e.g., a desktop computer, personal computer, a laptop/mobile computer, a personal data assistant (PDA), a mobile phone, a tablet computer, cloud computing device, and the like, with wired/wireless communications capabilities via the communication channels.

According to an example, the global navigation satellite system (GNSS) may include a device and/or system that may estimate its location based, at least in part, on signals received from space vehicles (SVs). In particular, such a device and/or system may obtain "pseudorange" measurements including approximations of distances between associated SVs and a navigation satellite receiver. In a particular example, such a pseudorange may be determined at a receiver that is capable of processing signals from one or more SVs as part of a Satellite Positioning System (SPS). Such an SPS may comprise, for example, a Global Positioning System (GPS), Galileo, Glonass, to name a few, or any SPS developed in the future. To determine its location, a satellite navigation receiver may obtain pseudorange measurements to three or more satellites as well as their positions at time of transmitting. Knowing the SV orbital parameters, these positions can be calculated for any point in time. A pseudorange measurement may then be determined based, at least in part, on the time a signal travels from an SV to the receiver, multiplied by the speed of light. While techniques described herein may be provided as implementations of location determination in GPS and/or Galileo types of SPS as specific illustrations according to particular examples, it should be understood that these techniques may also apply to other types of SPS, and that claimed subject matter is not limited in this respect.

Aspects of the disclosure may include communication channels that may be any type of wired or wireless electronic communications network, such as, e.g., a wired/wireless local area network (LAN), a wired/wireless personal area network (PAN), a wired/wireless home area network (HAN), a wired/wireless wide area network (WAN), a campus network, a metropolitan network, an enterprise private network, a virtual private network (VPN), an internetwork, a backbone network (BBN), a global area network (GAN), the Internet, an intranet, an extranet, an overlay network, Near field communication (NFC), a cellular telephone network, a Personal Communications Service (PCS), using known protocols such as the Global System for Mobile Communications (GSM), CDMA (Code-Division Multiple Access), GSM/EDGE and UMTS/HSPA network technologies, Long Term Evolution (LTE), 5G (5th generation mobile networks or 5th generation wireless systems), WiMAX, HSPA+, W-CDMA (Wideband Code-Division Multiple Access), CDMA2000 (also known as C2K or IMT Multi-Carrier (IMT-MC)), Wireless Fidelity (Wi-Fi), Bluetooth, and/or the like, and/or a combination of two or more thereof. The NFC standards cover communications protocols and data exchange formats, and are based on existing radio-frequency identification (RFID) standards including ISO/IEC 14443 and FeliCa. The standards include ISO/IEC 18092[3] and those defined by the NFC Forum

The many features and advantages of the disclosure are apparent from the detailed specification, and, thus, it is intended by the appended claims to cover all such features and advantages of the disclosure which fall within the true spirit and scope of the disclosure. Further, since numerous modifications and variations will readily occur to those skilled in the art, it is not desired to limit the disclosure to the exact construction and operation illustrated and described, and, accordingly, all suitable modifications and equivalents may be resorted to that fall within the scope of the disclosure.

## Claims

1. A hoist system comprising:
a hook;
a cable connected to the hook;
a motor configured to move the hook and the cable;
an overload protection device (OLPD) configured to limit loads imparted on one or more of the hook, the cable, and the motor; and
an overload protection device (OLPD) slip detection system configured to detect activation of the overload protection device (OLPD).

2. The hoist system according to claim 1 wherein when the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), and/or a processor.

3. The hoist system according to claim 1 wherein the overload protection device (OLPD) slip detection system comprises at least one sensor implemented as an OLPD activation sensor to detect activation of the overload protection device (OLPD).

4. The hoist system according to claim 3 wherein the at least one sensor is configured to detect a movement and comprises at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder.

5. The hoist system according to claim 1 wherein the overload protection device (OLPD) slip detection system comprises at least one sensor and a comparator;
wherein the at least one sensor is configured to detect a movement of components between the overload protection device (OLPD) and the motor;
wherein the at least one sensor is configured to detect a movement of components between the overload protection device (OLPD) and the hook; and
wherein the comparator compares the movement of components between the overload protection device (OLPD) and the motor to the movement of components between the overload protection device (OLPD) and the hook to detect activation of the overload protection device (OLPD).

6. The hoist system according to claim 5 wherein when the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), and/or a processor.

7. The hoist system according to claim 5 wherein the at least one sensor is configured to detect a movement and comprises at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder.

8. The hoist system according to claim 1 further comprising at least one sensor,
wherein the overload protection device (OLPD) slip detection system is configured to receive operator control inputs;
wherein the at least one sensor is configured to detect a movement of components between the overload protection device (OLPD) and the hook; and
wherein the overload protection device (OLPD) slip detection system is configured to compare the operator control inputs to the movement of components between the overload protection device (OLPD) and the hook to detect activation of the overload protection device (OLPD).

9. The hoist system according to claim 8 wherein when the overload protection device (OLPD) slip detection system determines that the overload protection device (OLPD) has been activated, the overload protection device (OLPD) slip detection system signals at least one of the following: a pilot, a crew, a display, a control system, a storage device, a storage system, a data acquisition system (DAQ), and/or a processor.

10. The hoist system according to claim 8 wherein the at least one sensor is configured to detect a movement and comprises at least one of the following: a hall effect sensor, a resolver, a capacitive transducer, a capacitive displacement sensor, an eddy-current sensor, an ultrasonic sensor, a grating sensor, an inductive non-contact position sensor, a laser doppler vibrometer (optical), a linear variable differential transformer (LVDT), a multi-axis displacement transducer, a photodiode array, a piezo-electric transducer (piezo-electric), a potentiometer, a proximity sensor (optical), a rotary encoder (angular), a string potentiometer, a string encoder, a cable position transducer, a linear encoder, and a rotary encoder.

11. The hoist system according to claim 1 wherein the overload protection device (OLPD) is configured to implement OLPD activation to start slipping above a certain torsional range.

12. The hoist system according to claim 1 wherein the overload protection device (OLPD) is configured to reengage after OLPD activation to stop slipping below a certain torsional range.

13. The hoist system according to claim 8
wherein the overload protection device (OLPD) is configured to implement OLPD activation to start slipping above a certain torsional range; and
wherein the overload protection device (OLPD) is configured to reengage after OLPD activation to stop slipping below a certain torsional range.

14. The hoist system according to claim 1 wherein the overload protection device (OLPD) is configured with one or more mechanical clutches.

15. The hoist system according to claim 1 wherein the overload protection device (OLPD) is configured with electrically activated clutches.
